# EUROPEAN PATENT APPLICATION

(11) **EP 1 837 375 A2**
(43) Date of publication of application: **26.09.2007**
(21) Application number: 07104798.9
(22) Date of filing: 23.03.2007
(51) Int. Cl.: C08L 83/04

(54) **Curable silicone composition**

(30) Priority: 24.03.2006 JP 2006083671
(71) Applicant: Shin-Etsu Chemical Co., Ltd., Chiyoda-ku, Tokyo 100-0004 (JP)
(72) Inventor: Arai, Masatoshi, Annaka-shi Gunma 379-0224 (JP)
(74) Representative: van Loon, C.J.J.

(57) **Abstract**

A composition comprising
(A) a cyclopolysiloxane represented by the following formula (1) having a norbornenyl group and/or a vinyl group each bonded to a silicon atom, 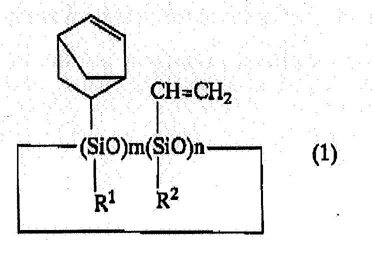 (B) a polycyclopolysiloxane comprising a cyclopolysiloxane unit represented by the following formula (2) 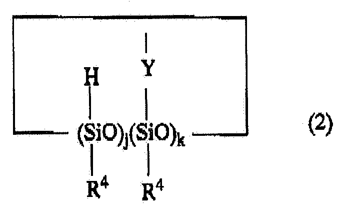 (C) a cyclopolysiloxane represented by the following formula (3) having two SiH bonds 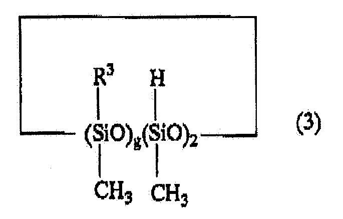 and (D)an addition reaction catalyst. The composition forms a cured product which is flexible and resistant to heat and organic solvents and is suitable as a binder resin for powder.

## Description

### BACKGROUND OF THE INVENTION

The present invention relates to a composition having excellent heat resistance and petroleum solvent resistance, specifically to a composition comprising a cyclopolysiloxane having norbornenyl and vinyl groups each bonded to a silicon atom, a multifunctional organohydrogensiloxane, a bifunctional cyclic organohydrogensiloxane, and an addition reaction catalyst.

Recently, magnetic devices are widely used as industrial parts such as automotive sensors. Generally, these parts are produced by compounding magnetic powder with an organic binder and curing and/or molding the binder. Because of automotive applications where parts come in contact with gasoline or lubricant oil, the molded compounds are required not to swell in hydrocarbon solvents as well as to have excellent mechanical strength and heat resistance.

As the organic binder, epoxy resins are commonly used. Cured products of the epoxy resins are mechanically strong, but their heat resistance is not enough for required long-term reliability. Silicone resins have been studied, but silicone varnish has been found to be not adequate due to brittleness of its cured product. Silicone rubber, on the other hand, has been found to be too soft for a binder use. To solve this problem, Japanese Patent Application Laid-Open No.2005-298606 discloses a curable composition comprising a cyclopolysiloxane having an unsaturated group, a cyclopolysiloxane having a SiH bond and a curing catalyst. However, a cured product thereof lacks flexibility.

### SUMMARY OF THE INVENTION

An object of the present invention is to provide a curable composition which forms a flexible and solvent resistant cured product and is suitable as a binder for powder.

The present invention is a composition comprising
(A) a cyclopolysiloxane represented by the following formula (1) having a norbornenyl group, a vinyl group or a norbornenyl group and a vinyl group each bonded to a silicon atom, 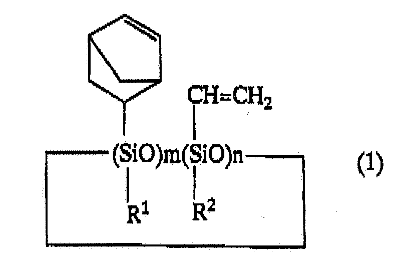 wherein R¹ and R² may be the same with or different from each other and are substituted or unsubstituted alkyl groups having 1 to 12 carbon atoms, each of m and n is an integer of from 0 to 10 with m+n being 3 or larger,
(B) a polycyclopolysiloxane comprising a cyclopolysiloxane unit represented by the following formula (2) 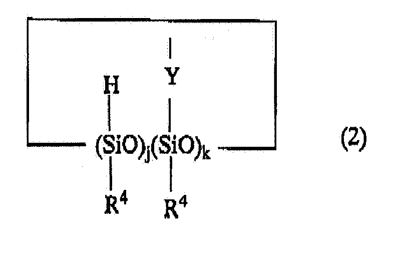 wherein R⁴ may be the same with or different from each other and is a substituted or unsubstituted alkyl group having 1 to 12 carbon atoms, each of j and k is an integer of from 1 to 9 with j+k being 3 or larger, and Y is an alkylene group having 1 to 10 carbon atoms,
(C) a cyclopolysiloxane represented by the following formula (3) having two SiH bonds 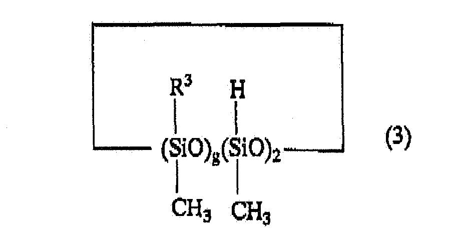
wherein R³ may be the same with different from each other and is a substituted or unsubstituted alkyl group having 1 to 12 carbon atoms, and g is an integer of from 1 to 8, and
a catalytic amount of (D)an addition reaction catalyst,
amounts of the components (A),(B) and (C) being such that a molar ratio of a total of the SiH bonds of the components (B) and (C) to the unsaturated bond of the component (A) ranges from 0.1 to 10.

The present composition comprises both a component to attain mechanical strength and a component to attain flexibility to form a cured product having mechanical strength, heat resistance and solvent resistance. The composition is suitable as a binder of molded automotive parts.

### DETAILED DESCRIPTION OF THE INVENTION

### Component (A)

In the present composition, the component (A) is a cyclopolysiloxane represented by the above formula (1) having a norbornenyl group and/or a vinyl group. The component (A) may be a mixture of two or more of the cyclopolysiloxane. In the present invention, the norbornenyl group is essential. A composition that differs from the present composition only in absence of a norbornenyl group has been found to form a cured product having many cracks on its surface. This indicates that the norbornenyl moiety gives flexibility to a cured product of the present composition. In the formula (1), siloxane units having a vinyl group and those having a norbornenyl group may be bonded randomly.

In the formula (1), R¹ and R² are alkyl groups which may be different from each other. Examples of R¹ and R² include alkyl groups such as methyl, ethyl, propyl, isopropyl, butyl, tert-butyl, pentyl, isopentyl, hexyl and sec-hexyl groups; cycloalkyl groups such as cyclopentyl and cyclohexyl groups; halogenated groups thereof such as chloromethyl, 3-chloroprpyl, and 3,3,3-trifluoropropyl groups; and cyanoalkyl groups such as 2-cyanoethyl group, among which methyl group is preferred.

In the formula (1), each of m and n is an integer of from 0 to 10, preferably from 1 to 6, with m+n being 3 or larger, preferably ranging from 4 to 10. The cyclopolysiloxane of the formula (1) can be easily prepared by subjecting a cyclopolysiloxane having a vinyl group and cyclepentadiene, which can be obtained by pyrolyzing dicyclopentadiene, to Diels-Alder reaction to convert the vinyl group to a norbornenyl group. By using a cyclopolysiloxane having a plurality of vinyl groups and converting a part of the vinyl groups to a norbornenyl group, a cyclopolysiloxane having both vinyl and norbornenyl groups can be obtained. In the formula (1), the one with m being 0 represents a unreacted cyclopolysiloxane possibly remaining in a reaction product.

### Component (B)

The component (B) is a polycyclopolysiloxane having a cyclopolysiloxane unit represented by the following formula (2). The component (B) can be a mixture of two or more of the polycyclopolysiloxane.

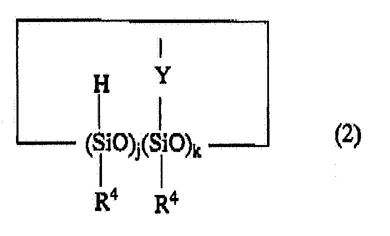

In the above formula, R⁴ is a substituted or unsbustituted alkyl group having 1 to 12 carbon atoms which may be the same with or different from each other; j and k are integers of from 1 to 9 with j + k being 3 or larger; Y is an alkylene group having 1 to 10 carbon atoms. Examples of R⁴ include alkyl groups such as methyl, ethyl, propyl, isopropyl, butyl, tert-butyl, pentyl, isopentyl, hexyl and sec-hexyl groups; cycloalkyl groups such as cyclopentyl and cyclohexyl groups; halogenated groups thereof such as chloromethyl, 3-chloroprpyl, and 3,3,3-trifluoropropyl groups; and cyanoalkyl groups such as 2-cyanoethyl group, among which methyl group is preferred. In the formula (2), siloxane units may be bonded randomly.

Preferably, each of j and k is an integer of from 1 to 6, more preferably from 1 to 4. Preferably, Y is an alkylene group having 2 to 4 carbon atoms.

Examples of preferred cyclopolysiloxane unit are those having one alkylene group, two alkylene groups, three alkylene groups and four alkylene groups as shown below: 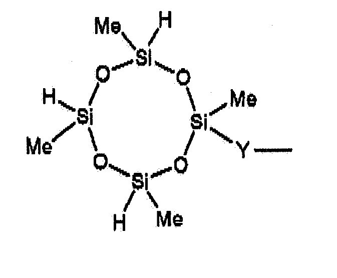 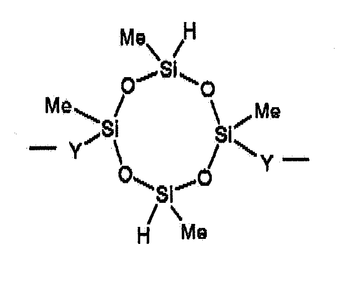 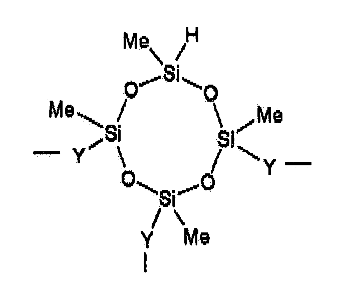 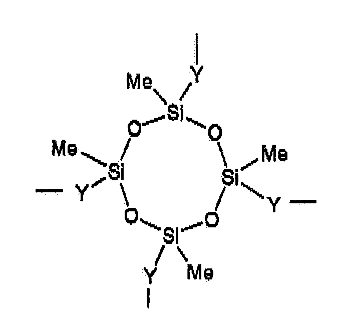 wherein Me represents a methyl group and Y is as defined above.

A preferred polycyclopolysiloxane (B) has the following repeating unit.

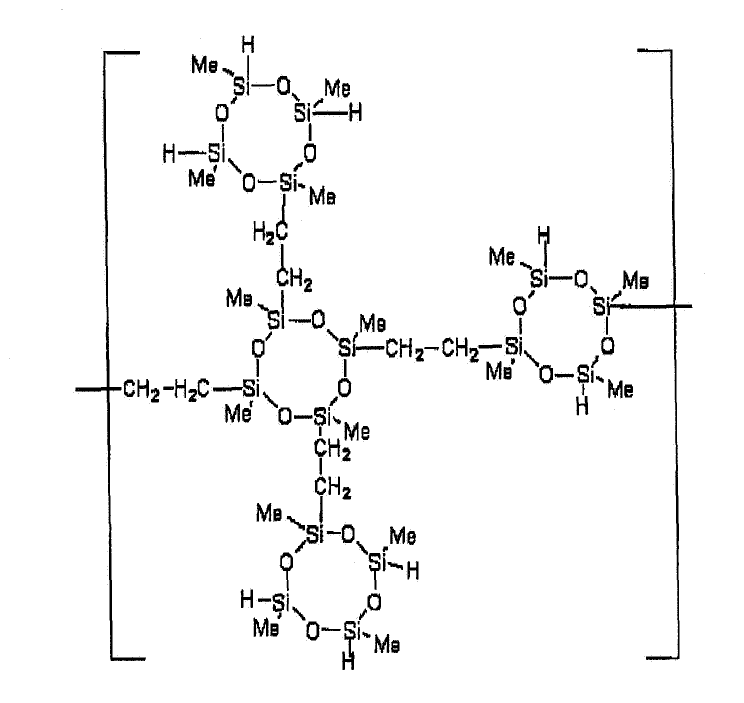

The polycyclosiloxane (B) has 1 to 100, preferably 1 to 50 repeating units.

The component (B) can be prepared by subjecting a cyclopolysiloxane (b1) having a hydrogen atom in place of Y in the above formula (1) and a cyclopolysiloxane (b2) having an alkylene group to an addition reaction.

An example of the cyclopolysiloxane (b1) is represented by the following formula (4) : 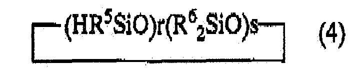 wherein R⁵ and R⁶ which may be the same with or different from each other and are selected from the groups listed for R⁴, among which a methyl group is preferred, r is an integer of from 2 to 10, preferably from 2 to 8 and s is an integer of from 0 to 7, preferably from 0 to 2 with r+s ranging from 3 to 10, preferably from 3 to 6. In the formula, siloxane units may be bonded randomly.

Examples of the cyclopolysiloxane (b1) include 1,3,5,7-tetramethylcyclotetrasiloxane, 1,3,5,7,9-pentamethylcyclopentasiloxane, 1,3,5,7,9,11-hexamethylcyclohexasiloxane, and a mixture thereof, among which 1,3,5,7-tetramethylcyclotetrasiloxane is preferred because of easy production and good availability.

An example of the cyclopolysiloxane (b2) is represented by the following formula (5):

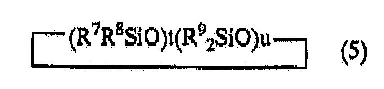

In the formula, R⁸ and R⁹ which may be the same with or different from each other and are selected from the groups listed for R⁴, among which a methyl group is preferred. R⁷ is an alkenyl group having 2 to 10 carbon atoms, t is an integer of from 2 to 10, preferably from 2 to 8, and u is an integer of from 0 to 7, preferably from 0 to 2, with t+u ranging from 3 to 10, preferably from 3 to 6. In the formula, each siloxane unit may be bonded randomly.

Examples of R⁷ include alkenyl groups such as vinyl, allyl, propenyl, butenyl, pentenyl, and hexenyl groups, among which a vinyl group is preferred.

Examples of the cyclopolysiloxane (b2) include 1,3,5,7-tetravinyl-1,3,5,7-tetramethylcyclotetrasiloxane, 1,3,5,7,9-pantavinyl-1,3,5,7,9-pentamethylcyclopentaslloxane, 1,3,5,7,9,11-hexavinyl-1,3,5,7,9,11-hexamehtylcyolohexasiloxane and a mixture thereof, among which 1,3,5,7- tetravinyl-1,3,5,7-tetramethylcyclotetrasiloxane is preferred because of easy production and good availability.

The component (B) can be prepared by subjecting aforesaid (b1) and (b2) to an addition reaction in such an amount that a molar amount of the SiH bonds of (b1 exceeds that of the alkenyl groups of (b2) in the presence of a hydrosilylation catalyst such as the after-mentioned component (D). Preferably, an amount of the SiH bonds of (b1) is in the range of from 2.0 to 10.0 moles, preferably from 4.0 to 8.0 per mole of the alkenyl groups in (b2).

Conditions of the addition reaction can be those conventionally employed. The hydrosilylation catalyst can be selected from those listed for the after-mentioned component (D). Preferably, platinum metal deposited on carbon is used for the reason that an addition reaction proceeds moderately, preventing gel formation due to a local vigorous reaction. Further, the platinum metal deposited on carbon can be removed from a reaction mixture easily by filtration, for instance, after the reaction completes. The reaction product thus obtained is storage stable without showing increase in viscosity because of no residual catalyst.

### Component (C)

The component (C) is a cyclopolysiloxane having two SiH bonds per molecule represented by the following formula (3).

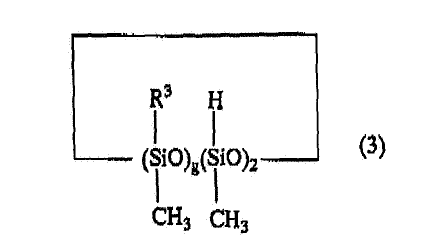

In the formula (3); R³ is a substitute or unsubstituted alkyl group which may be the same with or different from each other, if g is 2 or larger; and g is an integer of from 1 to 8, preferably from 1 to 4. Examples of R³ include alkyl groups such as methyl ethyl, propyl, ispropyl, butyl, tert-butyl, pentyl, isopentyl, hexyl and sec-hexyl groups; cycloalkyl groups such as cyclopentyl and cyclohexyl groups; and halogenated alkyl and cyanoalkyl groups such as chloromethyl, 3-chloropropyl,3, 3, 3-trifluoropropyl, and 2-cyanoethyl groups, among which propyl group is preferred.

Preferred component (C) is as shown below.

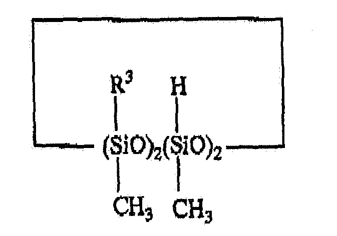

Contents of the aforesaid (A) to (C) components are such that a molar ratio of a total of the SiH bonds of the components (B) and (C) to the unsaturated groups, i.e., a total of vinyl and norbornenyl groups of the component (A) ranges from 0.1 to 10, preferably from 0.5 to 3. A composition with content of SiH bonds below aforesaid lower limit may not be cured sufficiently, and a composition with content of SiH bonds above the aforesaid upper limit may form a cured product which is not so hard and tends to degrade with time. The aforesaid molar ratio corresponds to a total 1 to 200 parts by weight, preferably from 5 to 100 parts by weight, of the components (B) and (C) per 100 parts by weight of the component (A), though these values vary depending on molecular weight of the components.

By varying a weight ratio of the component (B) to the component (C) in the aforesaid range, a cured product having a desired hardness can be obtained. Generally, a larger ratio gives a harder product and a smaller ratio gives a softer rubbery product.

### Component (D)

Examples of the addition catalyst (D) include group VII metals in the periodic table and compounds thereof. Preferably, platinum and compounds thereof are used, for example, chloroplatinic acid, reaction products of platinum with alcohols, complexes of platinum with olefin such as ethylene and vinylsiloxane, platinum metal deposited on silica, alumina, or carbon, and a mixture thereof. Platinum group metal catalysts other than platinum are also known, for example, rhodium, ruthenium, iridium, and palladium compounds such as RhCl(PPh₃)₃, RhCl(CO)(PPh₃)₂, Ru₃(CO)₁₂, IrCl(CO)(PPh₃)2, and Pd(PPh₃)₄. The component (D) is contained in the composition in a catalytic amount, which typically ranges from 0.001 to 10 parts by weight, more typically from 0.01 to 5 parts by weight, per total 100 parts by weight of the components (A), (B) and (C). If the component (D) is contained less than the catalytic amount, sufficient curing may not be attained. Too much amount of component (D) makes curing speed too fast to control.

In addition to the aforesaid components (A) to (D), the present composition can contain a filler to improve mechanical strength of a cured product. Examples of the filler include fumed silica, precipitated silica, pulverised silica, calcium carbonate, diatomaceous earth, spherical plastic filler, silicone powder, carbon black, various kinds of metals and metal oxides. The filler may be surface treated.

The present composition can further contain various kinds of additives in an amount not to adversely affect properties of the composition. For example, an antioxidant can be incorporated such as 2,6-di-t-butyl-4-mothylphenol, 2,5-di-t-amylhydroquinone, 2,5-di-t-butylhydroquinone, 4,4'- butylidenebis(3-methyl-6-t-butylphenol), 2,2'-methylenebis(4-methyl-6-t-butylphenol), or 2,2'-mothylenebis(4-ethyl-6-t-butylphenol). A mixture of two or more of the antioxidants can be used. An amount of the antioxidant typically ranges from 10 to 10,000 ppm, particularly from 100 to 1,000 ppm, based on a total weight of the components (A) and (B). The antioxidant in the aforesaid amount can prevent discoloration, clouding, and oxidation degradation, allowing the composition to be used for optical applications.

A light stabilizer can be incorporated in the composition to provide the composition with resistance to degradation by light such as sunlight and light from a fluorescent bulb. Preferred light stabilizers are hindered amine compounds. By using the light stabilizer together with the aforesaid antioxidant, effect of antioxidant can be increased in a synergistic manner. Examples of the hindered amine compounds are bis(2,2,6,6-tetramethyl-4-piperidyl)sebacate, 4-benzoyl-2,2,6,6-tetramethylpiperidine, and a mixture thereof.

The composition can further contain an addition reaction retarder to secure a pot life. Examples of the retarder include acetylanic alcohols such as 1-ethynyl-1-hydroxycyclohexane, 3-methl-1-butyne-3-ol, 3,5-dimethyl-l-hexyene-3-ol, 3-methl-1-pantene-3-ol, and phenylbutenol; 3-methyl-3-pentene-1-yne, 3,5-dimehtyl-3-hexene-1-yne, polymethylvinylsiloxane cyclic compound, and organic phosphorus compounds. The retarder suppresses curing reaction to improve storage stability of the composition.

The present composition can be prepared by mixing at room temperature the aforesaid components (A), (B), (C) and (D), and optional components, if desired. Any known mixing means can be employed. A molded article of the present composition can be prepared as follows: mixing the components (A), (B) and (C) with a mixing means such as a Shinagawa mixer, adding the component (D) just before molding, and casting the composition in a mold followed by heating in an oven, or molding with a press molding machine which can be heated.

### EXAMPLES

The present invention will be further explained with reference to the following examples, but not limited thereto. In Examples, viscosities were those measured at 25°C.

### Preparation of Component (A)

in a 2000 ml four-necked flask fitted with a stirrer, a condensor and a thermometer, 382g(2.89 moles)of dicyclopentadiene and 1000g of methylvinyltetrasiloxane having a vinyl value of 1.16 moles/100g were placed and subjected to a reaction at a temperature of from 150°C to 160°C for 6 hours under nitrogen gas flow. By vaccuum distilling volatile substances off, 1288g of transparent light yellow liquid, herein after referred to as "polysiloxane A", having a viscosity of 50 mPa·s and a refractive index of 1.480 was obtained.

### Preparation of Component (B)

In a 500 ml four-necked flask fitted with a stirrer, a condensor, a dropping funnel and a thermometer, 150 g of toluene and 144g (0.6 mole) of 1,3,5,7-tetramethylcyclotetrasiloxane were placed and heated at 80°C in an oil bath. To the flask, 0.05 g of carbon powder with 5 wt% of platinum metal deposed thereon was added. Subsequently, 34.4 g (0.1 mole) of 1,3,5,7-tetravinyl-1,3,5,7-tetramethyloyclotetrasiloxane was added dropwise in 60 minutes while mixing. After the addition completed, the reaction mixture was heated at 95°C for 5 hours while stirring and then cooled to room temperature. The carbon powder with platinum metal deposed thereon was filtered out. By vaccuum distilling toluene and volatile substances off, 115 g of transparent colorless oily reaction product, hereinafter referred to as "polysiloxane B", having a viscosity of 770 mPa·s and a SiH content of 0.83 mole/100g was obtained. No vinyl group was detected in the polysiloxane B.

### Example 1

A composition was prepared by mixing 100 parts by weight of the polysiloxane A, 70 parts by weight of the polysiloxane B, and 68 parts by weight of a cyclic polysiloxane represented by the following formula as component (C), herein after referred to as "polysiloxane C", and a platinum-diviyltetramethyldisiloxane complex as component (D) in an amount of 20 ppm, as platinum metal, based a total weight of the components (A), (B) and (C). In the composition, a molar ratio of a total SiH bonds in the polysiloxane B and the polysiloxane C to a total of vinyl and norbornenyl groups of the polysiloxane A was 1.19.

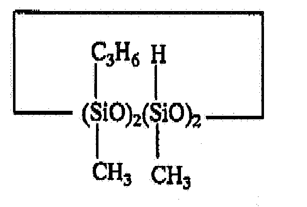

### Example 2-5

Compositions comprising each component in an amount (parts by weight) as shown in Table 1 were prepared in the same manner as in Example 1.

### Preparation of cured products

A composition was poured in a 9 mm-deep aluminum petri dish, and kept in an oven at 120°C for 30 minutes and then at 150°C for 60 minutes to prepare a cured product.

The cured product thus obtained was evaluated by the following methods. Results are as shown in Table 1.

### Hardness

After cooling a cured product to room temperature, its hardness was measured with a Shore D scale hardness tester.

### Swelling in toluene

A test piece having a size of about 3 cm² was cut from a cured product. The test piece was immersed in 30 ml of toluene placed in a 50 ml glass container for 30 minutes. The test piece was weighed immediately after taken out from toluene and a weight increase in % was calculated as a degree of swelling.

### Heat resistance

A test piece having a size of about 3 cm² was cut from a cured product. The test piece was kept in an oven at 180 °C for 72 hours and weighed to calculate a change (%) in weight.

**Table 1**

| | Example 1 | Example 2 | Example 3 | Example 4 | Example 5 |
|---|---|---|---|---|---|
| Polysiloxane A | 100 | 100 | 100 | 100 | 100 |
| Polysiloxane B | 70 | 20 | 100 | 140 | 42 |
| Polysiloxane C | 68 | 134 | 27 | 136 | 49 |
| SiH/unsaturated bond | 1.19 | 1.2 | 1.2 | 2.4 | 0.7 |
| Pt (ppm) | 20 | 20 | 20 | 20 | 20 |
| Hardness (Shore D) | 56 | 25 | 85 | 28 | 33 |
| Swelling (toluene) | +4.0% | +5.0% | +1.3% | +6.5% | +7.1% |
| Weight change,% (180°C, 72 hrs) | -0.08 | -0.15 | -0.23 | -0.10 | +0.20 |

### Electronic properties

Electronic properties as shown in Table 2 were measured according to the Japanese Industrial Standard K 6249 on a cured product of the composition of Example 1.

**Table 2**

| | |
|---|---|
| Volume resistivity | 1.7×10¹⁷ Ω·cm |
| Dielectric constant (50Hz) | 2.50 |
| Dielectric constant dissipation factor (50Hz) | 0 0045 |
| Dielectric breakdown strength | 25 kv/mm |

### Optical transparency

A test piece having a thickness of 2 mm was prepared from the composition of Example 1. A light transmission at 300 nm of the test piece was measured to be 79.5% with a spectrophotometer model U-3310, ex Hitachi Co.

### Comparative Example 1

A composition was prepared in the same manner as in Example 1 except that 72 parts by weight of methylvinyltetrasiloxane was used in place of the polysiloxane A. The composition thus obtained was cured in the manner as described above, but cracks occurred throughout a product during cooled to room temperature.

### Comparative Example 2

A composition was prepared in the same manner as in Example 1 except that 104 parts by weight of linear polysiloxane of the formula Me₃Si(OSiMeH)₄OSiMe₃ was used in place of the polysiloxane B. A cured product was prepared in the manner as described above, but it was soft and rubbery having a Shore D scale hardness of 3 and a degree of swelling of 35 %.

### Industrial Applicability

The present composition forms a cured product which has excellent hardness and solvent resistance and is suitable as a binder of molded automotive parts. The cured product also has excellent electronic properties, so that it can be used for semiconductor or electric parts. Further, because of good optical transparency, optical applications are expected such as making optical lenses and encapsulating optical devices such as LED.

## Claims

1. A composition comprising
(A) a cyclopolysiloxane represented by the following formula (1) having a norbornenyl group, a vinyl group or a norbornenyl group and a vinyl group each bonded to a silicon atom, 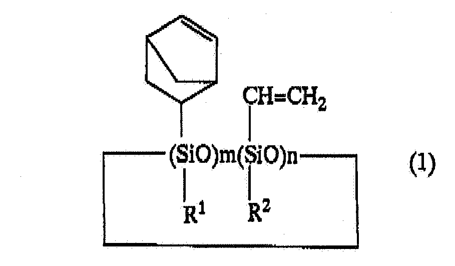 wherein R¹ and R² may be the same with or different from each other and are substituted or unsubstituted alkyl groups having 1 to 12 carbon atoms, each of m and n is an integer of from 0 to 10 with m+n being 3 or larger,
(B) a polycyolopolysiloxane comprising a cyclopolysiloxane unit represented by the following formula (2) 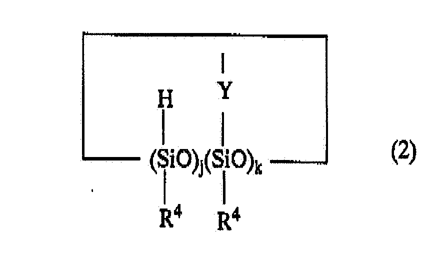 wherein R⁴ may be the same with or different from each other and is a substituted or unsubstituted alkyl group having 1 to 12 carbon atoms, each of j and k is an integer of from 1 to 9 with j+k being 3 or larger, and Y is an alkylene group having 1 to 10 carbon atoms,
(C) a cyclopolysiloxane represented by the following formula (3) having two SiH bonds 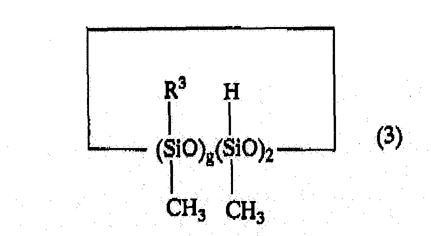
wherein R³ may be the same with different from each other and is a substituted or unsubstituted alkyl group having 1 to 12 carbon atoms, and g is an integer of from 1 to 8, and
a catalytic amount of (D) an addition reaction catalyst,
amounts of the components (A),(B) and (C) being such that a molar ratio of a total of the SiH bonds of the components (B) and (C) to the unsaturated bond of the component (A) ranges from 0.1 to 10.

2. The composition according to claim 1, wherein a molar ratio of the total of the SiH bonds of the components (B) and (C) to the unsaturated bond of the component (A) ranges from 0.5 to 3.

3. The composition according to claim 1 or 2, wherein the component (A) is represented by the following formula.

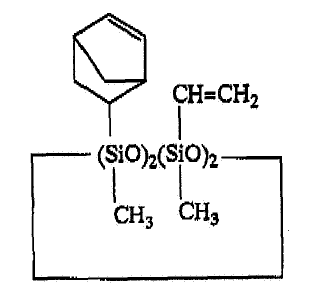

4. The composition according to any one of claims 1, to 3, wherein the polycyclopolysiloxane (B) has the following repeating units.

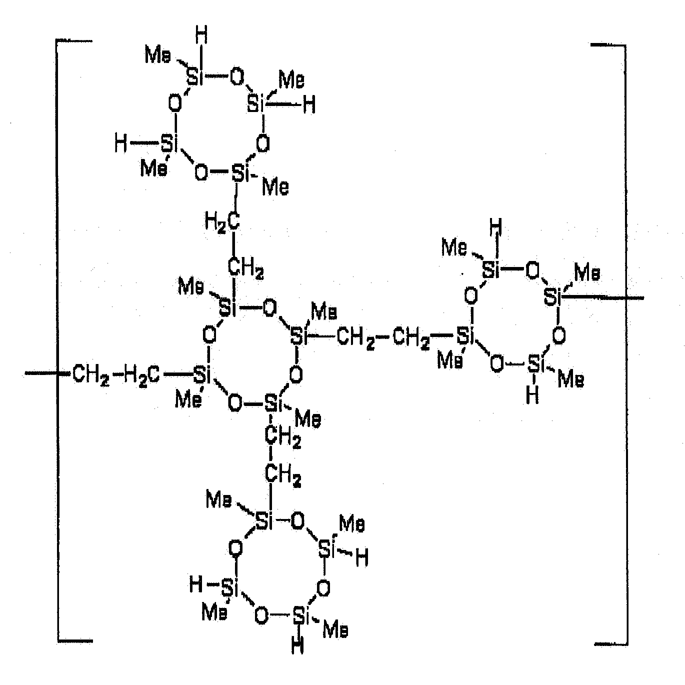

5. The composition according to any one of claims 1 to 4, wherein the component (C) is represented by the following formula.

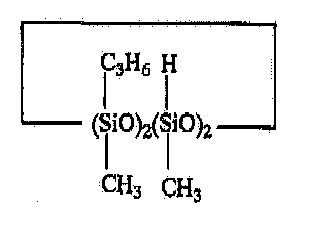

6. A binder comprising the composition according to any one of claims 1 to 5.
